# EUROPÄISCHE PATENTANMELDUNG

(11) **EP 1 634 765 A2**
(43) Veröffentlichungstag der Anmeldung: **15.03.2006**
(21) Anmeldenummer: 05018521.4
(22) Anmeldetag: 25.08.2005
(51) Int. Cl.: B60N 2/68

(54) **Rücklehne für einen Sitz, insbesondere einen Rücksitz eines Kraftfahrzeuges**

(30) Priorität: 10.09.2004 DE 102004043860
(71) Anmelder: Euromotive GmbH & Co. KG, 5651 Lend (AT)
(72) Erfinder: Garnweidner, Peter, 5112 Lamprechtshausen (AT)
(74) Vertreter: Pohlmann, Eckart

(57) **Zusammenfassung**

Rücklehne für einen Sitz, insbesondere einen Rücksitz eines Kraftfahrzeuges aus einem Verbundkörper, der zwei Blechteilen (1, 2) umfasst, zwischen denen einen Schaumstoffkörper (4) angeordnet ist, wobei im Verbundkörper zwischen den Blechteilen (1, 2) Einrichtungen (6) zum Abstützen einer Kopfstützenführung angeordnet sind.

## Beschreibung

Die Erfindung betrifft eine Rücklehne für einen Sitz, insbesondere einen Rücksitz eines Kraftfahrzeuges.

Bei einem Kraftfahrzeug mit begrenztem Raum im Rücksitzbereich, insbesondere bei einem Sportwagen, besteht die Rücklehne für den in vielen Fällen nur als Notsitz ausgebildeten Rücksitz aus einem dünnen blech- oder brettartigen Bauteil, das mit einer Polsterung versehen ist, über die der Bezug führt.

Bei dem Sportwagen vom Typ 911 der Fa. Porsche besteht eine derartige Rücklehne beispielsweise aus einem Holzbrett mit umlaufend aufgeschraubten Stahlwinkeln für die Bezugsbefestigung. Es ist auch bekannt, die Rücklehne in Form eines Bleches auszubilden, das zum Kofferraum hin eben zur Polsterseite hin stark strukturiert ist. Es ist weiterhin bekannt, einen tragenden Rohrrahmen vorzusehen, der an der Rückseite mit einem Blechteil verschlossen ist.

Die oben beschriebenen Ausbildungen basieren alle darauf, dass bei einem Sportwagen die Rücksitze in einem extrem begrenzten Raum angeordnet werden müssen, da hinter den Vordersitzen wenig Platz ist. Die Konstruktion der Rücklehne muss daher so sein, dass diese möglichst dünn ist. Bei der Ausbildung einer Rücklehne als Holzbrett für das Fahrzeug vom Typ 911 der Fa. Porsche hat dieses beispielsweise eine Stärke von 18 mm.

Derartige Konstruktionen sind allerdings nur solange einsetzbar, solange an den Rücksitzen keine Kopfstützen vorgesehen sein sollen. Es ist aber zu erwarten, dass der Gesetzgeber künftig vorschreiben wird, dass an jedem Sitzplatz im Fahrzeug, das heißt auch an den Rücksitzen eines Sportwagens eine Kopfstütze vorhanden sein muss.

Die der Erfindung zugrunde liegende Aufgabe besteht daher darin, eine Rücklehne für einen Rücksitz eines Kraftfahrzeuges zu schaffen, die einen geringen Platz einnimmt und es dennoch erlaubt, eine Kopfstütze anzubringen.

Diese Aufgabe wird gemäß der Erfindung durch einen Verbundkörper aus zwei Blechteilen gelöst, zwischen denen Einrichtungen zum Abstützten einer Kopfstützenführung vorgesehen sind.

Die erfindungsgemäße Ausbildung hat den Vorteil, dass bei gegenüber bekannten Lösungen unverändertem Bauraum die Möglichkeit besteht, eine Kopfstütze zu integrieren.

Da darüber hinaus die Werkzeugkosten gering sind, ist die erfindungsgemäße Lösung auch bei geringen Stückzahlen, wie sie bei Sportwagen anzutreffen sind, kostengünstig.

Besonders bevorzugte Weiterbildungen und Ausgestaltungen der erfindungsgemäßen Rücklehne sind Gegenstand der Ansprüche 2 bis 8.

Wenn insbesondere die Rücklehne mit einem inneren Schaumstoffkörper versehen ist, ist sie besonders energieabsorbierend, so dass die Insassen vor der im Kofferraum befindlichen Ladung geschützt sind.

Im Folgenden wird anhand der zugehörigen Zeichnungen ein besonders bevorzugtes Ausführungsbeispiel der Erfindung näher beschrieben. Es zeigen
Fig. 1 in einer perspektivischen Ansicht die beiden Blechteile des Ausführungsbeispiels der erfindungsgemäßen Rücklehne,
Fig. 2 eine Teilschnittansicht des in Fig. 1 dargestellten Ausführungsbeispiels,
Fig. 3 die Montage der beiden Blechteile mit dazwischen befindlichem Schaumstoffkörper und

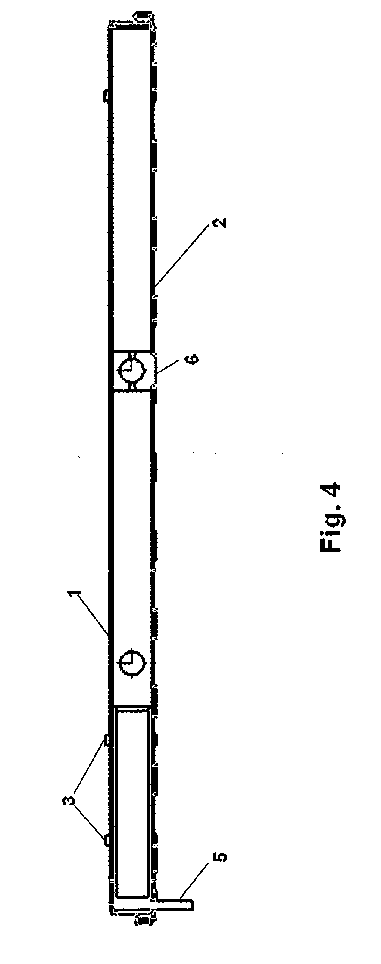

Fig. 4 eine Draufsicht auf eine Schmalseite des Ausführungsbeispiels von Fig. 1 im zusammengebauten Zustand.

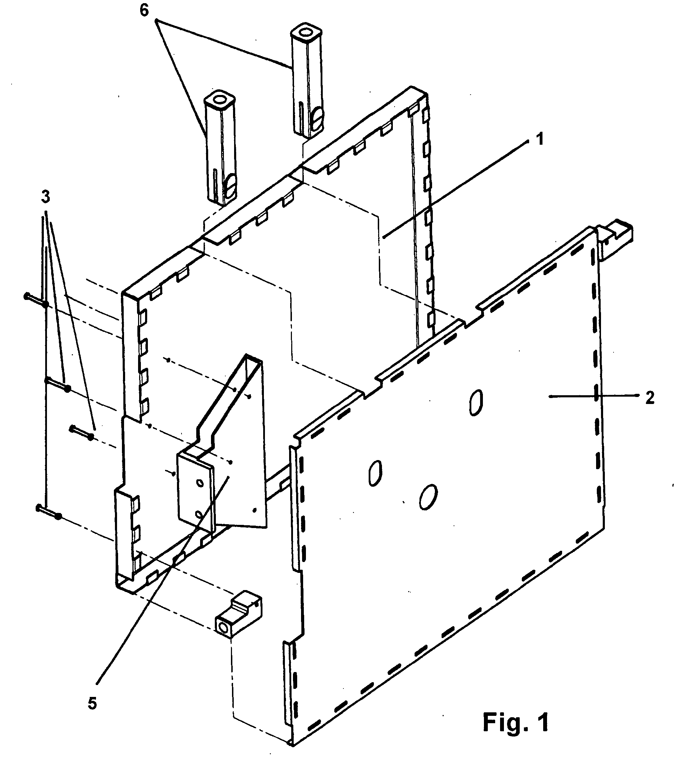

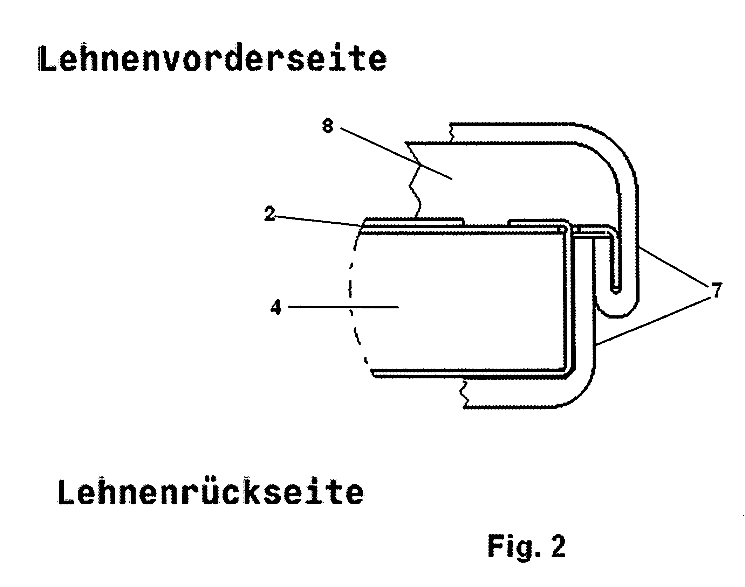

Wie es in den Fig. 1 und 2 dargestellt ist, sind bei der erfindungsgemäßen Rücklehne für einen Rücksitz eines Kraftfahrzeuges, beispielsweise eines Sportwagens, zwei Blechteile 1, 2 zu einem Verbundkörper zusammengesetzt, zwischen denen sich Einrichtungen 6 zum Abstützen einer Kopfstützenführung befinden.

Zwischen den beiden Blechteilen ist ein Schaumstoffkörper 4 angeordnet, der vorzugsweise aus einem PU-Schaum besteht.

Wie es in Fig. 2 dargestellt ist, bildet das Blechteil 1, das vorzugsweise als eine Wanne für den Schaumstoffkörper 4 ausgebildet ist, die Rückseite und bildet das Blechteil 2 auf der anderen Seite des Schaumstoffkörpers 4 die Vorderseite, auf der ein Schaumpolster 8 vorgesehen ist. Beide Teile 1, 2 sind mit einem Bezug 7 bespannt.

Wie es in Fig. 1 dargestellt ist, ist am Blechteil 1 eine Lehnenschlossverstärkung 5 befestigt, an der das Lehnenschloss angebunden ist.

Das Blechteil 1, das vorzugsweise das hintere Blechteil ist, dient als Zug- oder Druckgurt des Verbundkörpers je nach Belastungsfall. Es dient weiterhin als Auflagefläche für das Gepäck bei umgelegter Lehne, als Abstützung der Kopfstützenführung und als Integration der Verbindungshaken oder -laschen.

Das Blechteil 2, das vorzugsweise das vordere Blechteil ist, dient ebenfalls als Zug- oder Druckgurt des Verbundkörpers je nach Belastungsfall. Es bildet eine Auflagefläche für das Lehnenpolster und dient zur Abstützung der Kopfstützenführung. In diesem Blechteil 2 ist vorzugsweise ein Verriegelungsloch für die Kopfstützenführung vorzusehen.

Der Schaumstoffkörper 4, der aus einen Polymerschaum oder Ähnlichem besteht, wirkt als Abstandshalter für die Blechteile 1 und 2 und als Seitenführung für die Einrichtungen 6 zum Abstützten der Kopfstützenführung.

Am Schaumstoffkörper 4 können Verstärkungsteile und Führungen vorgesehen sein, die über einzelne Nietpunkte gehalten sind, ihren endgültigen Anschluss aber durch das Einschäumen des Schaumstoffkörpers erhalten.

Der Schaumstoffkörper 4 bewirkt weiterhin eine Geräuschdämmung, das heißt er dämmt das Dröhnen der Blechteile 1, 2, der Geräusche durch Mikrobewegungen an den Verbindungsstellen zwischen den beiden Blechen 1, 2 oder den Verstärkungsteilen.

Der Schaumstoffkörper 4 dient weiterhin zur Vorspannung der Verbindungsstelle der beiden Bleche, da der Schaum expandiert und dadurch die Verbindungsstelle spielfrei verpresst.

Der Schaumstoffkörper 4 dient weiterhin dazu, bei einem Aufprall Energie zu absorbieren.

Die Lehnenschlossverstärkung 5 besteht aus einem Aluminiumstrangpressprofil oder einem Gussteil.

Die Einrichtungen 6 zum Abstützen einer Kopfstützenführung bestehen aus einem Kunststoffmaterial mit einer Verriegelung für die Kopfstütze gegen ein Herausziehen. Die Kopfstützenführung wird automatisch in der Lehnenkonstruktion, beispielsweise in Form eines Formschlusses über eine Rastnase fixiert, wobei die Verriegelung erfolgt, sobald die Kopfstütze eingeschoben ist.

Am unteren Teil des Verbundkörpers befinden sich Lagerstellen für die Drehachse der Lehnenklappung, die aus Kunststoff gebildet sind.

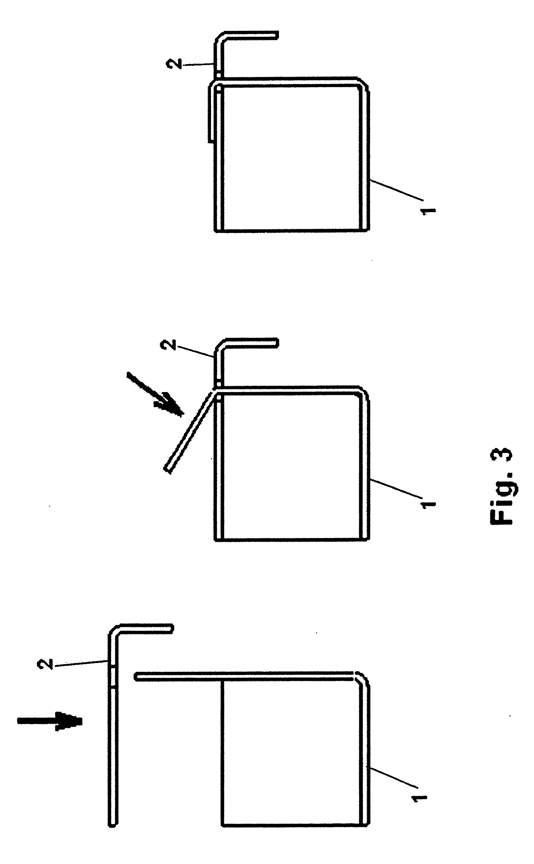

In Fig. 3 ist im Einzelnen dargestellt, dass die beiden Blechteile 1, 2 über Laschen miteinander verbunden sind. Wie es in Fig. 1 weiterhin dargestellt ist, besteht die Verbindung aus den in Fig. 3 dargestellten Laschen sowie zusätzlichen Zähnen, die umlaufend angeordnet sind.

Durch diese Art der Verbindung der beiden Bleche 1 und 2 ergibt sich eine homogene Verbindung mit den Vorteilen der fehlenden Wärmeeinwirkung (keine Entfestigung bei Leichtmetallen), einer umlaufend gleichen Geometrie des Bezugskanals, der fehlenden Notwendigkeit zusätzliche Verbindungselemente vorzusehen, einer geräuschfreien Verbindung durch das Ausschäumen nach dem Fügen infolge des Innendrucks des Schaums und geringer Werkzeugkosten.

Vorzugsweise ist der Verbund aus den beiden Blechteilen 1 und 2 durch Nietenverbindungen verstärkt. Die entsprechenden Nieten 3 verbinden die Lehenschlossverstärkung 5 mit den Blechteilen 1 und 2.

Das Ausschäumen der Baugruppe aus den Blechen 1 und 2 erfolgt nach dem Fügen der metallischen Komponenten, das heißt der Bleche 1 und 2. Dadurch wird jedes Einzelteil nochmals fixiert und gegen Mikrobewegungen geschützt. Diese Bewegungen könnten sonst zu Geräuschen führen.

Die erfindungsgemäße Rücklehne aus zwei Blechen mit einem Schaumstoffkörper und der Lehenschlossverstärkung sowie der zusätzlichen Einsätze, wie Kopfstütze und Drehachse hat insbesondere den Vorteil eines geringen Gewichtes. Vergleiche zwischen der bekannten Rücklehne aus einem Holzbrett und einer im Format gleichen Rücklehne mit dem erfindungsgemäßen Aufbau haben eine Ersparnis von ca. 700 g bei der erfindungsgemäßen Lehne ergeben.

Die erfindungsgemäße Ausgestaltung hat die weiteren Vorteile, dass die Lehne mit entsprechenden Werkzeugen an jedes Fahrzeug angepasst werden kann, dass durch Sicken die Beulstabilität erhöht werden kann und zusätzlich durch die Umformung der Blechteile eine Kaltverfestigung erfolgt, dass bei einer tiefgezogenen Blechwanne sich eine zusätzliche Verstärkung durch die umlaufende Abwinklung ergibt und dass die Platinenwerkzeuge für links und rechts gleich sind.

## Patentansprüche

1. Rücklehne für einen Sitz, insbesondere einen Rücksitz eines Kraftfahrzeuges, **gekennzeichnet durch** einen Verbundkörper aus zwei Blechteilen (1, 2) zwischen denen ein Schaumstoffkörper (4) angeordnet ist.

2. Rücklehne nach Anspruch 1, **dadurch gekennzeichnet, dass** zwischen den Blechteilen (1, 2) Einrichtungen (6) zum Abstützen einer Kopfstützenführung vorgesehen sind.

3. Rücklehne nach Anspruch 1, **dadurch gekennzeichnet, dass** der Schaumstoffkörper (4) aus einem PU-Schaum besteht.

4. Rücklehne nach einem der vorhergehenden Ansprüche, **dadurch gekennzeichnet, dass** die Bleche (1, 2) über Laschen und Zähne miteinander verbunden sind.

5. Rücklehne nach einem der vorhergehenden Ansprüche, **dadurch gekennzeichnet, dass** der Verbundkörper durch Nietenverbindungen verstärkt ist.

6. Rücklehne nach Anspruch 5, **dadurch gekennzeichnet, dass** die Nietenverbindungen eine Lehneschlossverstärkung (5) an den Verbundkörper anbinden.

7. Rücklehne nach einem der vorhergehenden Ansprüche, **dadurch gekennzeichnet, dass** eines der Blechteile (2) als eine Blechwanne ausgebildet ist, in der der Schaumstoffkörper (4) aufgenommen ist.

8. Rücklehne nach Anspruch 6, **dadurch gekennzeichnet, dass** das als Blechwanne ausgebildete Blechteil (2) die Rückseite der Rücklehne bildet.
